Europäisches Patentamt

European Patent Office

Office européen des brevets

(11) Publication number : **0 486 191 A1**

# EUROPEAN PATENT APPLICATION

(21) Application number : **91310153.1**

(22) Date of filing : **04.11.91**

(51) Int. Cl.⁵ : **F16H 15/18, F16H 15/32, F16H 15/44**

(30) Priority : **13.11.90 US 612632**
**16.04.91 US 685851**

(43) Date of publication of application :
**20.05.92 Bulletin 92/21**

(84) Designated Contracting States :
**DE FR GB IT**

(71) Applicant : **BORG-WARNER AUTOMOTIVE, INC.**
**6700 18 1/2 Mile Road P.O.Box 8022**
**Sterling Heights, Michigan 48311-8022 (US)**

(72) Inventor : **Durum, Metin M.**
**3 N. 417 Jill Court**
**Elmhurst, Illinois 60126 (US)**

(74) Representative : **Allden, Thomas Stanley et al**
**A.A. THORNTON & CO. Northumberland House 303-306 High Holborn**
**London WC1V 7LE (GB)**

(54) **Continuously variable traction drive with no contact spin.**

(57) A continuously variable traction drive having a torque input friction member (118) and a torque output friction member (122), each friction member having a rotary friction surface (120,128), at least one idler member (52) with friction surfaces (96) that engage the friction surfaces (120,128) of the torque input and torque output members (118,122) to establish a frictional driving connection between the input member and the output member (122), a traction torque transmitting contact area at an interface of the idler member (92) with each friction member (118,122), the location of the contact area being variable as the torque ratio changes so that a tangent line at the contact area intersects the axes of rotation of the input and output members at the point of intersection of the axes whereby the efficiency of the drive is improved because of the elimination of tangential spin forces at the contact area.

EP 0 486 191 A1

## Technical Field

My invention relates to traction drive mechanisms for transferring driving torque between traction members in a driveline.

## Background of the Invention

My invention relates generally to continuously variable traction drives that may be used, for example, with an internal combustion engine to effect high sustained efficiency, quiet operation and absence of maintenance over a long life. It includes torque transmitting elements in rolling contact.

In prior art traction drives, the point of contact of the torque transmitting elements is characterized by a contact area, referred to in prior art references as a Hertz contact area. With minimum pressure, the contact area is substantially zero, but when contact force is applied, deflection of the material will produce so-called Hertz forces in the contact area, the geometric shape of the contact area being determined by the geometry of the traction surfaces of the torque transmitting elements. In the case of lubricated traction drives, an oil film will be developed in the contact area that is subjected to high viscous shearing action.

It has been found that in traction drives of this kind, the viscous shearing forces in the contact area can be very high, thereby adversely affecting the driving efficiency and creating a power loss in the form of heat energy. If this occurs over a long period of time, the oil pad may break down and surface damage may occur. In the case of non-lubricated, dry traction drives, a similar power loss will occur if a plastic shearing action occurs at the contact area when high contact loads are present. Such plastic shear is distinguished from an elastic shear condition in which the traction forces do not develop incremental stresses in the contact area that exceed the elastic limits of the materials of which the drive members are formed.

The contact forces in a traction drive of this kind may cause a small contact area with high Hertz pressures or large contact areas with smaller Hertz pressures. A characteristic of the contact that is useful in calibrating the drive is the traction coefficient, which equals the ratio of the developed tangential force divided by the available contact force.

The traction capacity, the desired traction coefficient and the efficiency losses in the contact area may be computed. The value of the traction capacity depends upon the temperature of the oil. For each increment of area within the total contact area, a contact force, a Hertz pressure and the shear rate may be computed as well as a resultant force in any direction.

In such prior art designs, the clamping force between the rotating torque transmitting elements creates a tangential force on each element at the point of contact. The axis of rotation of one element will intersect the common tangent plane for the two elements at a first location, and the corresponding intersection of the axis of the other traction element with the common tangent will occur at a different location. The tangential velocities at the contact point for one rotating traction element is equal to the angular velocity times the radius measured from the axis of rotation of the traction element to the contact point. The same is true for the other rotating traction element.

In such prior art mechanisms, the tangential velocity at the point of contact for one traction element will differ from the corresponding tangential velocity for the companion traction element. Thus, a slippage occurs as torque is delivered from one traction element to the other. Tangential velocity vectors on either side of the velocity center for the contact area are oriented in opposite directions. Thus, the velocity center for the contact area appropriately can be referred to as a spin center or spin pole, and the tangential velocities thus can be referred to as spin velocities within the Hertz contact area. Under heavy pressure, this spin causes creep, loss of power, excessive heat and wear. It also reduces the load carrying capacity and the efficiency of the mechanism.

## Brief Description of the Invention

I have provided an improved traction drive system which eliminates the contact spin phenomenon described in the preceding discussion. I have accomplished this by providing a traction drive mechanism in which the tangent plane at the contact point between two traction members passes through the point of intersection of the axes of rotation of the traction members. This eliminates spin velocity and thus eliminates losses in efficiency that are associated with contact spin.

According to a principal feature of my invention, I have provided a mechanism in which the torque ratio or speed ratio of one traction member with respect to the other may be varied from one value to another without deviating from a design condition in which the axes of rotation of each of two rotating traction members intersect. The common tangent drawn through the contact point passes through the point of intersection of the axes of rotation throughout the entire torque ratio range.

## Brief Description of the Drawings

Figure 1 shows a prior art traction drive wherein the traction members are characterized by conical friction surfaces.

Figure 1A is a view similar to Figure 1 which shows traction members in which the contact between the friction members is in the form of a line or a contact area that is perpendicular to the axes of rotation of the traction members.

Figure 2 is an embodiment of my invention having two conical idlers in frictional driving engagement with driving and driven rollers with convex friction surfaces.

Figure 2A is a side view of the structure of Figure 2 as seen from the plane of section line 2A-2A of Figure 2.

Figure 3 is an embodiment of my invention that comprises an articulated connection between adjacent ends of a torque input shaft and a torque output shaft.

Figure 4 is another embodiment of the invention comprising an articulated shaft connection between the adjacent ends of a torque input shaft and a torque output shaft.

Figure 5 shows a constant velocity universal joint with axial travel embodying the traction principle of my invention.

Figure 6 shows an alternate embodiment of my invention which includes a pair of traction drive cones with an expandable idler that serves as a frictional driving connection between the torque input side of the mechanism and the torque output side.

Figure 7 is a chart showing the functional relationship between traction coefficient and Hertz pressure in the region of the contact of traction members.

Figure 8 shows in diagram form torque transmitting traction rollers that, in contrast to the teachings of my invention, do not make provision for the elimination of contact spin in the area of contact of the traction members.

Figure 9 is a schematic representation of a prior art infinitely variable drive in which toroidal discs are arranged in driving traction relationship with respect to cooperating idler rollers.

## Description of Best Mode for Carrying Out the Invention

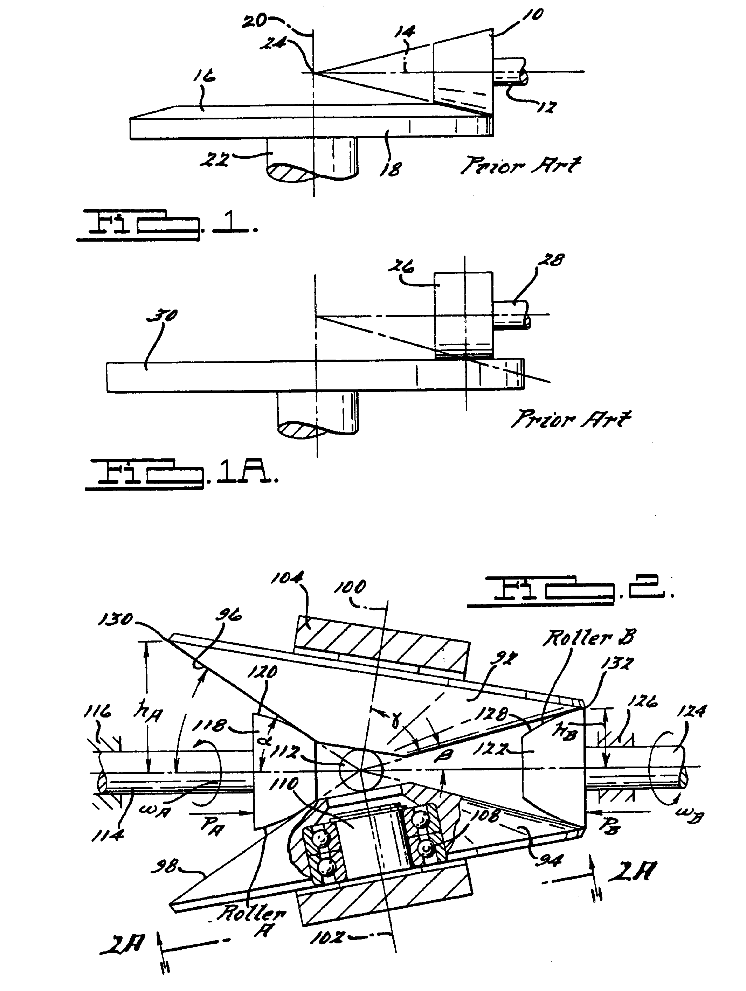

I have shown in Figure 1 a schematic representation of a prior art traction drive comprising a friction drive cone 10 connected to a torque input shaft 12 which is adapted to rotate about shaft axis 14. The friction surface of the cone 10 engages friction surface 16 of a torque output disc 18 which is adapted to rotate about axis 20 of torque output shaft 22. The apex of the cone of the surface for cone 20 lies on the axis 20, as shown at 24.

In the case of Figure 1, the circumferential velocity of any point on the cone 10 within the contact region of the surfaces 10 and 16 are equal throughout the extent of the contact. Thus, in the contact zone for the cone 10 and the disc 16, no relative tangential sliding motion will occur. It should be noted, however, that in the Figure 1 construction, it is not possible to vary the speed ratio for the traction drive unless the apexes are moved apart.

In contrast to the Figure 1 arrangement, a configuration such as that shown in Figure 1A will develop sliding velocities for points in the contact region of the driving member and the driven disc. In the case of Figure 1A, the driving member is a cylindrical traction member 26 adapted to rotate about the axis of torque input shaft 28 as a frictional driving relationship is established between the torque output drive disc member 30 and the traction member 26. Each point in the region of the contact of the traction members will have a velocity that differs from the corresponding tangential velocity for an adjacent point in the contact region, except at the so-called spin center discussed previously. It should be noted, however, that the spin center need not always be located in the contact area. Thus, relative sliding motion for points on the driving member 26 with respect to points on the driven member 30, except at the spin center, will take place. This sliding contact feature will apply also to a traction drive arrangement having non-conical traction members with friction roller surfaces such as that shown in Figure 8.

In Figure 8, a driving roller 30 has a friction surface 32 which engages a surface 34 of driven roller 36. Roller 30 is journalled for rotation about axis 38 with an angular velocity $\omega_A$. The driven roller 36 is adapted to rotate about its axis 40 with an angular velocity $\omega_B$. A common tangent line 42 extends through contact point P to apex B, which corresponds to the point of intersection of the tangent line with the axis 40.

Because of the compression of the materials of the rollers 30 and 36, the contact between rollers 30 and 36 can be represented by a contact area such as that shown in Figure 8 at 44. This is a more accurate designation of the contact characteristic between the rollers 30 and 36 than a representation that assumes a contact occurs only at a single point; e.g., point P.

In Figure 8, the contact area extends from point P1 to point P2 which defines the length of the major axis of an elliptical Hertz contact area.

For purposes of a torque analysis to accompany the sketch of Figure 8, it will be assumed that roller 36, which hereinafter during the analysis will be referred to as roller B, has a radius of $r_B$ extending from contact point P to the axis of rotation 40. Similarly, the radius between the axis 38 of roller 30 and the contact point for roller B is represented in the analysis by the symbol $r_A$. For purposes of the analysis, roller 30 and will be identified as roller A. The point of intersection of the axis of rotation 38 and the common tangent line 42 is represented in Figure 8 as apex A.

The angle between the axis 38 of roller A and the common tangent 42 is identified in Figure 8 as angle $\alpha$. The corresponding angle between the common tangent and the axis 40 of the roller B is identified in Figure 8 as angle $\beta$.

Let it be assumed that roller A drives roller B by reason of the frictional traction forces established by the traction rollers, the amount of traction force at the area of contact depending upon the compressive force or the clamping force. As explained previously, it will be assumed that the compressed rollers contact in an elliptical area in accordance with the Hertz theory rather than at a single point P. The tangential velocities at the contacting points within the Hertz contact area 44 can be defined as $V_A = \omega_A \cdot r_A$, and $V_B = \omega_B \cdot r_B$. These velocity vectors hold true in the general case of any point within the Hertz contact area.

The radii of the rollers at a point P can be expressed in terms of the distance to the apexes as follows: Defining $X_A = \overline{AP}$ and $X_B = \overline{BP}$, the radii become $r_A = X_A \cdot \sin \alpha$ and $r_B = X_B \cdot \sin \beta$. The tangential velocity for roller A thus can be written as $V_A = \omega_A \cdot \sin \alpha \cdot X_A = K_A \cdot X_A$. The corresponding tangential velocity for roller B can be vritten as $V_B = \omega_B \cdot \sin \beta \cdot X_B = K_B \cdot X_B$.

In Figure 8, I have plotted the tangential velocities that occur at points within the Hertz contact area and have drawn them on a common tangent. The locus of the ends of the velocity vectors shown in Figure 8 fall on reference line 46 in the case of roller A, and on reference line 48 in the case of roller B. Reference line 46 intersects the common tangent 42 at apex A located on the common tangent, and reference line 48 intersects the common tangent at apex B also located on the common tangent.

It will be seen from Figure 8 that there is a point C at the intersection of lines 46 and 48 where $V_A$ is equal to $V_B$. At any point in the Hertz contact area other than at point C, there will be a velocity difference which is representative of the slip in the contact area. The slip velocity is designated as $\Delta_V = V_A - V_B$. This slip velocity, which occurs as stated earlier at any place other than at contact point C, is shown in the lower portion of Figure 8. The shaded triangles in Figure 8 represent velocity vectors on each side of the zero velocity point C. This distribution of the slip velocities implies a so-called "spin" around point C, which acts as a pole. This spin action occurs whenever apex A does not coincide with apex B.

The construction of Figure 8 is typical of prior art arrangements where the common tangent at the contact point between the traction elements does not intersect the shaft axes for the traction elements throughout the torque ratio range of the traction drive.

In the case of an arrangement such as that shown in Figure 8, the speed ratio between the traction elements will vary as the angle $\alpha$ and the angle $\beta$ are varied. Thus, except for the special condition where the apexes A and B happen to coincide in an arrangement of the type shown in Figure 8, a spin velocity will occur in the Hertz contact area throughout the speed ratio range that may be achieved. In the case of this special condition, the speed ratio can be determined as follows: $\omega_A \div \omega_B = \sin \beta \div \sin \alpha$. In the general case in which the apexes A and B do not coincide, the speed ratio can be determined as follows:

$$\omega_A \div \omega_B = r_B \div r_A.$$

Another example of a prior art mechanism that relies on traction torque is shown schematically in Figure 9. The construction of Figure 9 includes a pair of driving toroidal members secured to a common shaft 50. Shaft 50 is connected directly to torque input shaft 52. The two toroidal members are shown at 54 and 56. These members respectively cooperate with toroidal members 58 and 60, which are journalled on shaft 50.

Toroidal members 54 and 58 have cooperating toroidal surfaces that engage frictionally a toroidal surface formed on disc 62, which is journalled for rotation about axis 64. Similarly, toroidal members 60 and 56 are formed with cooperating toroidal convex surfaces that register with a toroidal surface formed on disc 66, which is journalled for rotation on axis 68.

Toroidal members 58 and 60 are formed with drive gears 70 and 72, respectively. These mesh with torque output gears 74 and 76, respectively. Each of these output gears is connected drivably to separate output shafts 78, 80, respectively.

In the case of a vehicle drive, shafts 78 and 80 would be connected to traction wheels for the vehicle. A positive displacement fluid pump 81 may be connected drivably to the shaft 50 to supply pressure to pressure operated servos (not shown) which would control the angularity of the discs 64 as well as the clamping pressure of the discs with respect to the toroidal members 54, 58, 60 and 56.

The mechanism of Figure 9 serves as an infinitely variable traction drive in combination with differential gearing. Traction members 58 and 60 are separated by a radial roller thrust bearing 82.

In the case of the construction of Figure 9, the tangent lines 84 and 86 for the discs 62 intersect at the axis of the shaft 50. This point of intersection lies on the axis of rotation of the discs 64. A similar geometric relationship exists for the discs 66 and the toroidal elements 60 and 56. The tangents 88 and 90 drawn from the points of contact of the discs 66 with the toroidal elements 60 and 56 intersect on the axis of shaft 50. The point of intersection coincides with the intersection of the axis 68 with the axis of the shaft 50. If the rollers are positioned as shown in Figure 9, the tangential velocity that exists at the point of contact on the surface of the discs 62 will be exactly equal to the tangential velocity at the contact points for the toroidal elements 54 and 58. The same is true for the opposite side of the structure of Figure 9. That is, the tangential velocity at the points of contact for the discs 66 will be exactly equal to the tangential velocity at the points of contact for the toroidal elements 60 and 56. Thus, there is no contact spin at these points of contact. If the angles of the axes for discs 62 and 66 are changed, the points of intersection of the tangents for the contact points for discs 62 and for discs 66 no longer will intersect the axis of shaft 50 at the point of intersection of the axis of shaft 50 with the axis of rotation of the discs 64 and 66. Thus, of necessity, there will be a slipping or spinning motion in the Hertz area of contact at each point of contact for the discs 62 and 66. Thus, as the speed ratio of the mechanism of Figure 9 is adjusted by reason of an adjustment of the angularity of the discs 62 and 66, a spin velocity will be developed at all speed ratios except that specific speed ratio that exists in the particular condition illustrated in Figure 9.

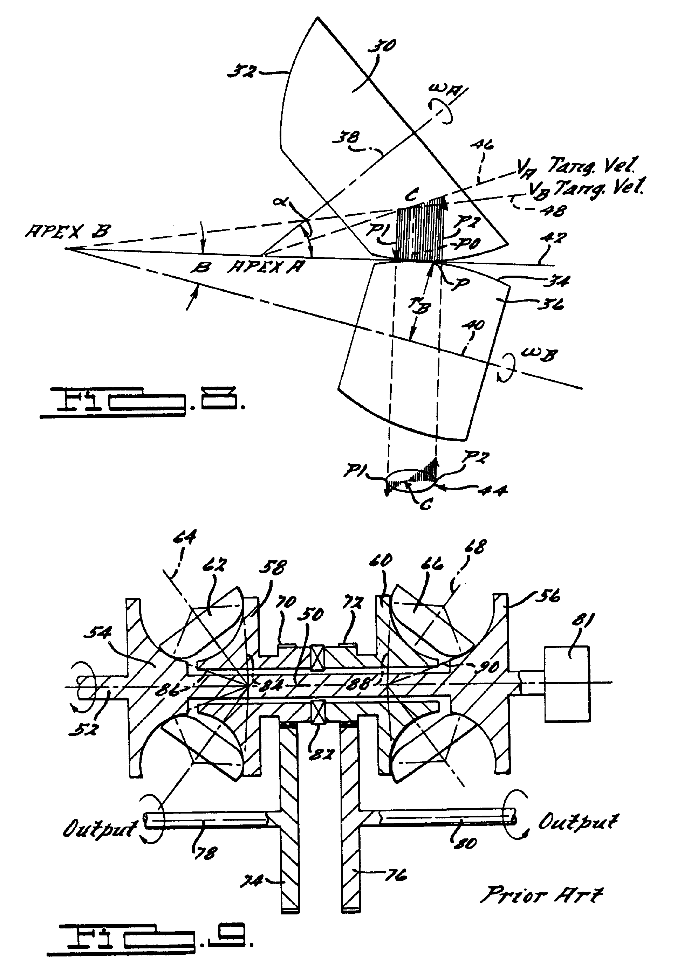

In each of the prior art examples discussed here as well as in the embodiment of the disclosed invention, the relationship between the traction coefficient and the Hertz pressures in the contact area is similar to that shown in Figure 7. The traction coefficient for low Hertz pressures rises on a nearly straight slope with increasing Hertz pressure. It then rounds off with a flat peak at Hertz pressure of about 200,000 psi.

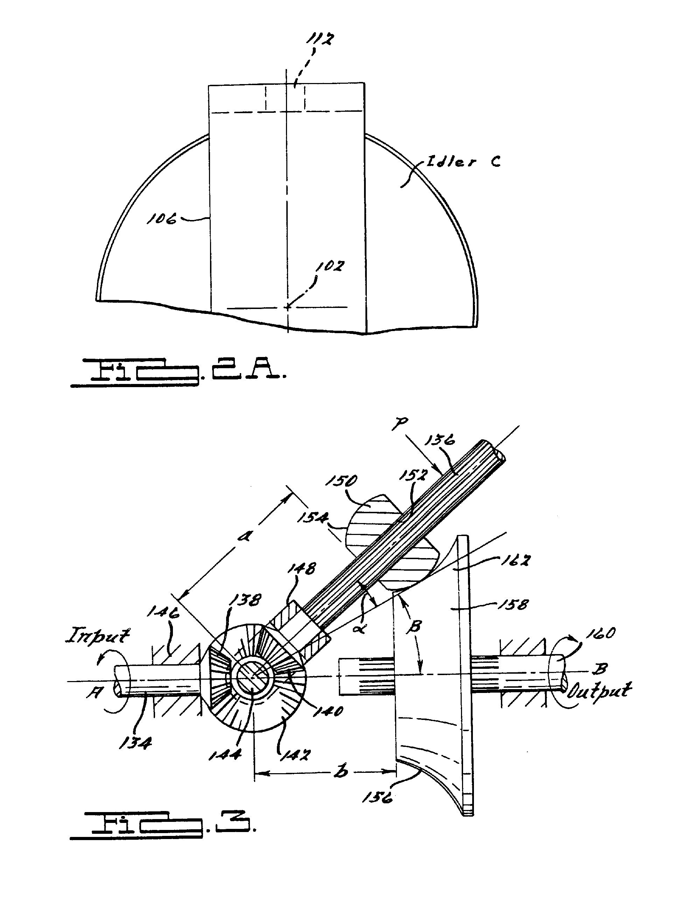

The contact spin velocity condition that is inherent in the construction of the prior art devices in Figures 8 and 9, for example, is eliminated in the improved construction of my invention. In the embodiment of my invention shown in Figure 2, I have provided a pair of conical discs 92 and 94.

Conical discs 92 and 94 are provided with conical traction surfaces 96 and 98, respectively. Disc 92 is mounted for rotation about axis 100 and disc 94 is mounted for rotation about the axis 102.

The discs 92 and 94 are mounted in a swivel frame comprising a first swivel frame portion 104 and a second swivel frame portion 106. Cone disc 94 is journalled by bearings 108 on mounting shaft 110, which is secured to swivel frame portion 106. A corresponding bearing and shaft arrangement is provided for mounting disc 92 on swivel frame portion 104. Swivel frame portions 104 and 106 are mounted for articulating motion about transverse shaft 112. The axis of rotation 100 for disc 92 and the axis of rotation 102 for the disc 94 intersect on the axis of shaft 112.

A torque input shaft 114 journalled at 116 carries a roller 118 having a curved traction surface 120. This roller is identified also as "Roller A" in Figure 2. A corresponding roller identified as roller 122, which also carries the legend "Roller B", is secured to torque output shaft 124. This shaft is journalled at shown at 126.

Roller B is provided with a curved traction surface 128. Both traction surfaces 120 and 128 for the rollers A and B frictionally engage the conical surfaces of the idler rollers 92 and 94. These rollers 92 and 94 are identified in Figure 2A by the legend "Idler C". When a force $P_A$ is applied to the shaft 114 in an axial direction, a reaction force $P_B$ is established on shaft 124 and roller 122. These forces $P_A$ and $P_B$ create a clamping force which establishes a tangential force at the points of contact of the rollers 118 and 122 with their respective idler discs.

In the case of Figure 2, a tangent line drawn through the points of contact for the surface 120 with respect to the cone surfaces of the idlers and the tangent line drawn through the points of contact of the roller 122 with respect to the cone surfaces of the idlers will pass through the axis of the shaft 112. The point of intersection for the tangent lines and the axis of shaft 112 coincides with a point on the axis of rotation of each of the idlers 92, 94. Thus, there is no relative tangential velocity component at the Hertz area of contact of the roller 122 with respect to the cone surfaces of idlers 92, 94, nor is there a differential tangential velocity component at the point of contact of roller 118 with respect to the cone surfaces of the idlers 92, 94.

The speed ratio can be changed by adjusting the angle $\alpha$, as shown in Figure 2. Angle $\alpha$ is the angle between the cone surface 96 and the axis of shaft 114. If the angle $\alpha$ changes, the speed ratio changes, but the tangents drawn for each point of contact of rollers 118 and 122 still will intersect the axis of rotation of the idler.

In the position of the idlers 92 and 94 shown in Figure 2, the angle between the surfaces of the idlers and the axis of shaft 124 is designated as angle $\beta$. The angular velocity of the shaft 114 is designated as $\omega_A$, and the corresponding angular velocity for shaft 124 is designated as $\omega_B$.

The angle formed by the cone surfaces of the idlers with respect to the axes of rotation of the idlers is designated as angle $\gamma$.

The speed ratio is controlled by changing angle $\alpha$ as the cone idlers swivel about the axis of shaft 112. That axis is designated by the symbol $o_\gamma$ in Figure 2A.

The speed ratio is computed by dividing $\omega_A$ by $\omega_B$. That speed ratio is equal to:

$$\frac{\sin \beta}{\sin \alpha}$$

which equals $h_A \div h_B$, where $h_A$ is the perpendicular distance from point 130 on cone surface 96 to the axis of shaft 114 and $h_B$ is the perpendicular distance from point 132 on cone surface 96 to the axis of shaft 124. The speed ratio can also be expressed in terms of a single variable $\alpha$ as follows:

$$\frac{\sin(2\gamma + \alpha)}{\sin \alpha}$$

A controller may be used for effecting ratio changes by controlling the magnitudes of forces $P_B$ and $P_A$. This is true since the ratio

$$h_B \div h_A = P_B \div P_A \cdot \frac{\overline{OC_B}}{\overline{OC_A}}$$

where O is the point of intersection of the axis of shaft 112 with the tangent lines for the points of contact of the rollers with respect to the idlers. The point of contact of roller 118 with conical surface 96 is shown in Figure 2 as point $C_A$, and the corresponding point for roller 122 is identified in Figure 2 as point $C_B$.

In the case of the embodiment as shown in Figure 2, the shafts 114 and 124 are in alignment. Thus, the

angle $\gamma$ for idler 92 is equal to the angle $\gamma$ for idler 94.

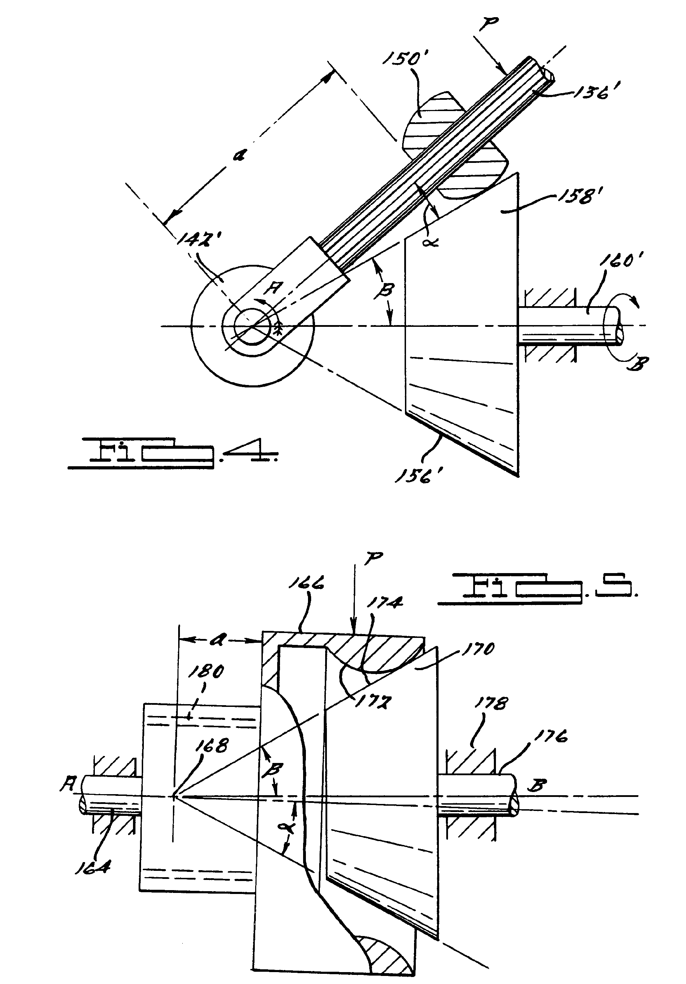

Figure 3 shows another embodiment of the invention wherein the input shaft 134 is articulated with respect to idler shaft 136. The adjacent ends of the shafts 134 and 136 carry bevel gears 138 and 140, which engage idler bevel gear 142 mounted on a shaft 144 extending perpendicularly with respect to the axes of shafts 134 and 136. The axes of shafts 134 and 136 intersect the axis of shaft 142. Shaft 134 is journalled at 146, and shaft 136 is journalled at 148 in a frame that is pivotally supported by shaft 144.

A drive roller 150 is drivably connected to shaft 136 with a sliding spline connection as shown at 152. Drive roller 150 has a curved traction surface 154, which frictionally engages a concave curved surface 156 on driven traction member 158. Torque output shaft 160 is connected drivably to traction member 158.

In Figure 3, a tangent line 162 drawn through the point of contact of roller 150 with the curved convex surface 156 passes through the point of intersection of the axis of shaft 136 with the axis of shaft 160. Thus, the tangential velocity of a point on roller 150 in the area of the contact with surface 156 is equal to the corresponding tangential velocity of a point on surface 156 in the area of contact. Since there is no differential angular velocity, the area of contact is not characterized by the spin velocity phenomenon described previously.

Ratio changes for the Figure 3 construction are made by controlling both of the dimensions "a" and "b". If both of these dimensions are not varied simultaneously during ratio changes, the tangent line will not pass through the point of intersection of the axes of shafts 136 and 160, and a spin velocity will occur in the contact area.

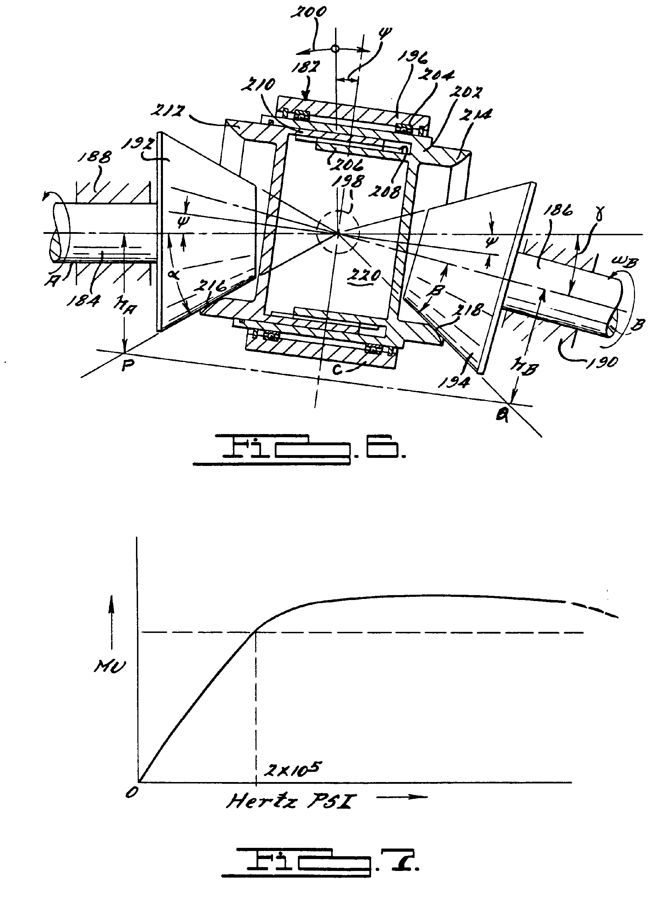

Figure 4 is an embodiment of the invention that is similar to the embodiment of Figure 3, although the output shaft 160' is connected to a conical drive member 158'. The conical surface 156' of the member 158' corresponds to the convex surface 156 of the embodiment of Figure 3. The tangent line drawn through the point of contact of member 150' with the surface 156' passes through the point of intersection of the axis of shaft 136' and the axis of shaft 160'. In Figure 4, the elements have been designated by reference characters that correspond to the reference characters used in Figure 3, although prime notations have been added. In both Figures 3 and 4, the force vector P applied to the idler shaft 136 or 136' creates a contacting force which controls the load capacity. The speed ratio is controlled by varying the dimension "a" which is the distance between the roller 150 or 150' and the axis of oscillation of the idler shaft 136 or 136'.

The control of speed ratios for the Figure 4 embodiment is simpler than the control of speed ratios for the Figure 3 embodiment because both dimensions "a" and "b" must be controlled simultaneously in the Figure 3 embodiment as explained above. The contact stresses for the Figure 3 embodiment should be lower, however, than the contact stresses for the Figure 4 embodiment because the concave profile for member 158 will result in a greater contact area for any given contact force.

The speed ratio in the case of Figures 3 or 4 is equal to $\sin \beta \div \sin \alpha$, where $\alpha$ is the angle between the tangent line for the point of contact and the axis of the idler, and angle $\beta$ is the angle between the tangent line and the axis of the output shaft.

Figure 5 shows the principle discussed with reference to Figures 1-4, but the principle is applied to a universal joint rather than to a geared power transmission mechanism. In Figure 5, a driving shaft 164 is connected to one member 166 of a constant velocity universal joint. Shaft 164 is pinned at 168 to the U-joint member 166, which surrounds conical driven member 170. Member 166 has an internal curved traction surface 172 that engages frictionally conical surface 174 on the driven member 170. Output shaft 176 is connected to the driven member 170 and is journalled at 178.

Force P applied perpendicularly with respect to the axis of shaft 176 establishes a tangential friction force. The tangent at the point of contact between curved surface 172 and conical surface 174 passes through the axis of the articulated connection 168 and the axis of the member 166. As in the case of the previous embodiments, this results in a zero tangential velocity differential at the point of contact. The connection between shaft 164 and member 166 includes a sliding spline schematically illustrated at 180 so that the dimension "a" may be varied depending upon the speed ratio that is desired.

In Figure 6, I have shown an embodiment of the invention that has an expandable idler designated generally by reference character 182. This embodiment includes an input shaft 184 and an output shaft 186, which are located in angular disposition, one with respect to the other. Shaft 184 rotates with an angular velocity $\omega_A$, and shaft 186 rotates with an angular velocity of $\omega_B$. Shaft 184 is journalled at 188 in a bearing support, and shaft 186 is journalled at 190 in a corresponding bearing support. Shaft 184 carries a conical drive cone 192 having a conical outer surface, and a corresponding driven cone 194 is connected to output shaft 196. Driven cone 194 includes a conical friction surface corresponding to the friction surface of cone 192.

The expandable idler comprises a pivoted housing 196, which is supported on shaft 198. Housing 196 is adapted to be pivoted about the axis of shaft 198, as indicated by the directional arrows 200. The angle of the pivoted housing shown as $\psi$ can be varied to vary the speed ratio.

The housing 196 has a central circular opening in which is positioned expandable idler cylinder member 202. Internal roller bearings 204 rotatably journal the cylinder member 202 within the housing 196. Cylinder member 202 is formed with an internal sleeve 206 which has external splines 208 that drivally and slidably engage sleeve portion 210 formed on traction ring 212. Cylinder member 202 forms a part of traction ring ring 214. Traction ring 212 has a toroidal internal traction surface 216 which frictionally engages the conical surface of member 192. A corresponding internal curved traction surface 218 is formed on the traction ring 214. Traction surface 218 engages the conical surface of the member 194.

The sleeves 210 and 206, together with the traction rings 212 and 214, define a pressure cavity 220. Pressure P in cavity 220 creates a force on the traction rings that establishes contacting force at the points of contact with the members 192, 194. The torque capacity is controlled by varying the pressure P.

The tangent line for the point of contact between the traction ring 214 and the member 194 passes through the center O for the pivotal axis for the housing 196. Similarlyn a tangent line drawn through the point of contact for the traction ring 212 and the cone 192 passes through the pivotal axis through the housing the housing 196.

If the traction ring are each identified as member C, the angular velocity of member C can be designated as $\omega_C$. The angular velocity for the input shaft is $\omega_A$, as explained. Thus, the speed ratio of the input shaft relative to the expandable idler is $\omega_A \div \omega_C$ which equals $\sin \alpha \div \sin(\alpha + |\psi|)$. Likewise, the speed ratio of the output shaft relative to the expandable idler equals $\omega_B \div \omega_C = \sin \beta \div \sin(\beta + |\gamma - \psi|)$. The overall speed ratio then can be computed by taking the ratio of the speed ratio values. Thus, the overall speed ratio $\omega_A \div \omega_B = \sin \alpha \div \sin \beta \cdot [\sin (\beta + |\gamma - \psi|) \div \sin(\alpha + |\psi|)] = h_B \div h_A$. The value for $h_A$ is the perpendicular distance from the axis of shaft 184 to the intersection of the tangent line $\overline{OP}$ for traction ring 212 and $h_B$ equals the perpendicular distance from the axis of shaft 186 to the tangent line for traction ring 212 with reference line $\overline{PQ}$ where $\overline{PQ}$ is a line drawn parallel to the cylinder axis of pivoted housing 196, as indicated in Figure 6. The value for $h_B$ is the perpendicular distance from the axis of shaft 186 to the intersection of the tangent line $\overline{OQ}$ for traction ring 214 with reference line $\overline{PQ}$.

The speed ratio is controlled by controlling the angle $\psi$, as explained previously. When the angle $\psi$ decreases, for example, the point of contact of the traction ring 214 with the traction surface 218 of member 194 moves toward the left. The corresponding point of contact for the traction ring 212 with traction surface 216 also moves toward the left. Thus, the contact point for the traction element 212 moves away from the axis of rotation of shaft 184 as the point of contact for traction element 214 moves closer to the axis for rotation of shaft 186. This pivoting action will be accompanied by relative sliding motion of the sleeves 210 and 206. During this adjustment, pressure in pressure chamber 220 will maintain a desired clamping force for each of the traction elements 212 and 214.

If desired, the angularity of the input shaft relative to the output shaft can be changed by altering the design. The shafts also can be arranged in alignment so the angle $\gamma$ would be equal to zero.

## Claims

1. A continuously variable traction drive comprising a driving member and a driven member, each of said members comprising a traction surface of revolution and being adapted to rotate about a geometric axis;

   at least one idler traction member mounted for oscillation about an axis perpendicular to said axis;

   said geometric axes intersecting at a common point;

   said idler member having a traction surface of revolution engaging the traction surface of said driving and driven members at a contact point;

   a tangent line drawn through said contact point intersecting said geometric axes at said common point throughout a range of relative positions of said driving and driven members.

2. A traction drive as claimed in claim 1 wherein said idler member is mounted for rotation about an axis of rotation that intersects said geometric axes at said common point upon angular adjustment of said idler member relative to said geometric axes.

3. A traction drive as claimed in claim 1 wherein said traction surfaces of said idler member are straight conical surfaces of revolution, a tangent line drawn through said contact point passing through the apex of said conical surface.

4. A traction drive as claimed in claim 1 wherein said idler traction member comprises two idler traction rings, each ring having a common axis and being carried by a separate one of a pair of idler member parts, one part being axially adjustable relative to the other in the direction of said common axis, one ring frictionally engaging one traction member and the other frictionally engaging the other traction member, said parts being axially adjustable, one with respect to the other, upon relative angular displacement of one traction member relative to the other.

5. A traction drive as claimed in claim 4 wherein said idler traction rings include registering spline portions extending axially whereby said traction rings are relatively adjustable axially upon relative angular adjustment of said traction members.

6. A traction drive as claimed in claim 5 wherein said traction rings cooperate to define a fluid pressure cavity whereby pressure in said cavity creates a frictional drive engaging force between said rings and said traction members.

7. A traction drive as claimed in claim 1 wherein said idler traction member comprises means for rotatably mounting the same about an axis disposed transversely relative to said geometric axis of said driving and driven members, said idler traction member being adjustable angularly upon movement of one of said traction members toward said transverse axis along said geometric axis whereby one of said contact points moves along said surface of revolution toward said transverse axis as the other contact point moves away from said transverse axis, thus varying the speed ratio of the traction drive.

8. A traction drive as claimed in claim 7 wherein said surface of revolution is a conical surface having an apex at a point on said geometric axis.

9. A traction drive comprising a pair of rotary traction torque delivery members, at least one of said traction members having a curved traction surface, the other of said traction members having a traction surface in frictional contact with said curved traction surface at a contact point;

   means for rotatably mounting each traction member for rotation about an axis of rotation whereby each traction surface rotates abouts its respective axis of rotation in rolling frictional contact with the traction surface of the other of said traction members;

   the axes for said traction members having a common point;

   means for varying the distance between said contact point and the axis of rotation for each traction member;

   the geometry of said traction surfaces being characterized by a contact point whose tangent lines pass through said common point throughout a range of radial positions of said contact point relative to said axes whereby the relative tangential velocity for each traction member at said contact point is substantially zero.

10. A traction drive comprising a pair of rotary traction torque delivery members, at least one of said traction members having a curved traction surface, the other of said traction members having a traction surface in frictional contact with said curved traction surface at a contact point;

   means for rotatably mounting each traction member for rotation about an axis of rotation whereby each traction surface rotates abouts its respective axis of rotation in rolling frictional contact with the traction surface of the other of said traction members;

   said axes intersecting at a point of intersection;

   means for varying the distance between said contact point and the axis of rotation for each traction member;

   the geometry of said traction surfaces being characterized by a contact point whose trangent line passes through said common point throughout a range of radial positions of said contact point relative to said point of intersection whereby the relative tangential velocity for each traction member at said contact point is substantially zero.

**FIG. 1.** Prior Art

**FIG. 1A.** Prior Art

**FIG. 2.**

FIG. 2A.

FIG. 3.

FIG. 4.

FIG. 5.

FIG. 6.

FIG. 7.

EP 0 486 191 A1

FIG.8.

Prior Art

FIG.9.

13

European Patent
Office

**EUROPEAN SEARCH REPORT**

Application Number

EP    91 31 0153

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | FR-A-1 003 009 (HONORE) <br><br> * page 1 - page 4; figures 1,2,7 * <br> --- | 1,4,7,9, 10 | F16H15/18 <br> F16H15/32 <br> F16H15/44 |
| X | DE-B-1 234 118 (ELIN-UNION) <br> * column 3; figures 1-3 * <br> --- | 1 | |
| X | AU-A-456 532 (BERESFORD) <br> * page 5 - page 7; figures 1-6 * <br> --- | 1,9,10 | |
| A | US-A-1 856 383 (GERDES) <br> * page 1, line 70 - line 91; figure 1 * <br><br> ----- | 1-3 | |

TECHNICAL FIELDS
SEARCHED (Int. Cl.5 )

F16H

The present search report has been drawn up for all claims

| Place of search | Date of completion of the search | Examiner |
|---|---|---|
| THE HAGUE | 13 FEBRUARY 1992 | FLORES E. |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P0401)